# EUROPÄISCHE PATENTSCHRIFT

(11) **EP 2 586 750 B1**
(45) Veröffentlichungstag und Bekanntmachung des Hinweises auf die Patenterteilung: **27.03.2019**
(21) Anmeldenummer: 12005137.0
(22) Anmeldetag: 12.07.2012
(51) Int. Cl.: C03B 9/453, C03B 9/38

(54) **Absetzplattenanordnung**
Dead plate assembly
Plaque de refroissement

(30) Priorität: 28.10.2011 DE 102011117169
(43) Veröffentlichungstag der Anmeldung: 01.05.2013
(73) Patentinhaber: Heye International GmbH, 31683 Obernkirchen (DE)
(72) Erfinder: Isensee, Dennis, 31698 Lindhorst (DE); Felgenhauer, Benedikt, Dr., 32049 Herford (DE); Kässner, Waldemar, 31749 Auetal (DE)
(74) Vertreter: Sobisch, Peter

(56) Entgegenhaltungen:
- EP-A1- 0 153 801
- WO-A1-88/10240
- DE-B4- 10 039 343
- US-A- 2 677 919
- US-A- 3 510 288
- US-A- 4 022 604
- US-A- 4 414 758
- US-A- 4 579 576
- US-A- 4 973 347
- US-A1- 2007 006 617

## Beschreibung

Die Erfindung bezieht sich auf eine Absetzplattenanordnung entsprechend dem Oberbegriff des Anspruchs 1.

Bei der Einrichtung und Bemessung der aufzubringenden Kühlleistung für die auf die Absetzplatte einer I.S. Glasformmaschine (individual section) gelangenden Hohlglasartikel muss beachtet werden, dass die zu kühlenden Artikel zunächst noch temperaturbedingt als mechanisch instabil anzusehen sind und dass Maßnahmen getroffen werden müssen, um eine sichere Aufstandposition auf der Absetzplatte zu erreichen. Insbesondere muss vermieden werden, dass die eingebrachte Kühlluft unter den Artikeln ein solches Luftpolster ausbildet, welches diese zum Wandern, Umfallen usw. veranlaßt. Die Auslegung der aufzubringenden Kühlleistung muss somit artikelspezifisch als ein Optimierungsvorgang betrachtet werden, der diese zum Teil gegenläufigen Einflüsse berücksichtigt.

Erschwert wird diese Aufgabe durch den Umstand, dass bei mehreren in einer Station hergestellten Artikeln deren Temperatur und damit deren mechanische Beschaffenheit stark variiert und dementsprechend die eingesetzte Kühlleistung neu eingestellt werden muss, ein Vorgang, der nach Maßgabe der Häufigkeit der erforderlichen Anpassungsmaßnahmen, insbesondere bei häufig wechselnden Artikeln zu Verlustzeiten sowie im Anschluss an eine Anpassung zu Schäden an den Artikeln in der Form von Heißrissen führen kann, die unter Umständen erst nach Stunden, nämlich am kalten Ende einer Produktionsanlage bemerkt werden. Dieses Problem stellt sich stets dann, wenn mehrere Hohlglasartikel der Station (double gob-, triple gob-, quad gob-Betrieb) entnommen werden, deren jeweilige Temperaturen variieren, so dass Neueinstellungen der Kühlleistung für die Zeit des Aufstehens auf der Absetzplatte erforderlich werden.

Aus der DE 100 39 343 B4 sowie der US 4 508 557 B sind Absetzplattenanordnungen bekannt, bei denen ein zum Aufstehen von Hohlglasartikeln bestimmter Plattentisch mit zur Führung von Kühlluft bestimmten Bohrungen versehen ist. Die zur Verfügung stehende Kühlleistung ist bei allen Artikeln gleich. Eine individuelle Behandlung eines einzelnen Artikels ist nicht vorgesehen. Gleiches gilt auch für die aus der DE 101 01 296 B4 und der EP 131 81 16 B1 bekannten Absetzplattenanordnungen.

Die aus der US 3 510 288 B bekannte Absetzplattenanordnung ist durch zwei Zonen gekennzeichnet, die unterschiedlichen Kühlluftmengen und/oder -drücken beaufschlagbar sind. Vergleichbar ausgebildet ist auch die der US 2 677 919 B bekannte Absetzplattenanordnung, deren Staudruckkammern mit stetig steuerbaren Ventilen ausgerüstet sind und deren Kühlluftversorgung mit einem zwischen einer Schließstellung und einer Öffnungsstellung stetig regelbaren Ventil versehen ist. Die aus diesen beiden Dokumenten bekannten Absetzplattenanordnungen ermöglichen zwar die Darstellung einer zonenabhängigen Kühlleistung, wobei jedoch alle in einer Zone aufstehenden Hohlglasartikel einer gleichen Kühlleistung ausgesetzt sind.

Schließlich ist es aus dem Dokument DE 100 06 130 B4 bekannt, die Reglereinstellungen für die Druckluftversorgung während der unterschiedlichen Phasen des Blasverfahrens in einer Glasformmaschine artikelspezifisch und zentralisiert unter Mitwirkung einer Datenbank einzurichten, so dass zur Fomgebung eines bestimmten Hohlglasartikels auf diese Daten zurückgegriffen werden kann. Diese Steuerung bezieht sich jedoch nicht auf die Einstellung der Kühlleistung bei den auf einer Absetzplatte aufstehenden Artikeln.

Die Kühlleistung, die zur Behandlung der auf einer Absetzplatte aufstehenden Artikel nach diesem Stand der Technik bereit gestellt wird, wirkt somit stets pauschaliert und gleichförmig auf mehrere Artikel ein. Ein unter Umständen individuell differenzierter Bedarf an Kühlleistung ist hierbei nicht darstellbar.

Es ist die Aufgabe der Erfindung, eine Absetzplattenanordnung entsprechend dem Oberbegriff des Anspruchs 1 dahingehend auszugestalten, dass der auf den einzelnen Hohlglasartikel einwirkende Kühlluftstrom in einfacher Weise individuell und somit bedarfsgerecht ausgelegt ist. Es geht somit darum, den störenden Einfluss variierender Ausgangstemperaturen der zu kühlenden Hohlglasartikel bei der Bemessung der aufzuwendenden Kühlleistung zu eliminieren. Gelöst ist diese Aufgabe bei einer solchen Absetzplattenanordnung durch die Merkmale des Kennzeichnungsteils des Anspruchs 1.

Erfindungswesentlich ist hiernach, dass jedes zum Aufsetzen eines Hohlglasartikels bestimmte Feld der Absetzplatte mit einer Staudruckkammer ausgerüstet ist, deren Druck individuell steuerbar ist, so dass der aus der Absetzplatte feldspezifisch austretende Kühlluftstrom durch Variieren des Druckes in der Staudruckkammer einstellbar ist. Somit können für jedes der mehreren Felder der Absetzplatte unterschiedliche Kühlluftströme und damit unterschiedliche Kühlleistungen bereit gestellt werden. Ausgehend von einer Kenntnis der Beschaffenheit der Hohlglasartikel ist somit eine diesen Rechnung tragende bedarfsgerechte Kühlung darstellbar.

Die Staudruckkammern befinden sich zusammen mit einer allen Staudruckkammern gemeinsamen Zuluftkammer in einem einheitlichen Gehäuse unterhalb der Absetzplatte. Die Zuluftkammer wird über eine Kühlluftversorgung mit Kühlluft beaufschlagt und dient dazu, diese auf die einzelnen Staudruckkammern zu verteilen.

Die Zuluftkammer und die Staudruckkammern sind jeweils mit stetig zwischen einer Öffnungsstellung und einer Schließstellung motorisch steuerbaren Ventilen ausgerüstet. Somit können die Kühlluftzufuhr in die Zuluftkammer und gleichermaßen die Kühlluftzufuhren in die Staudruckkammern unabhängig voneinander geregelt werden, beispielsweise mit dem Ziel, eine gleichförmige reproduzierbare und an den einzelnen Hohlglasartikel angepasste Kühlleistung in den einzelnen Feldern der Absetzplatte darzustellen.

Es ist ein maximaler, jeweils einem Feld der Absetzplatte zugeordneter Kühlluftstrom eingerichtet, der über einen Überströmkanal austritt und zusätzlich zu dem, über das Ventil des Feldes austretenden Kühlluftstrom als Kühlmedium zur Verfügung steht. Dieser maximale Kühlluftstrom wird zur Kühlung des in einen Take Out Greifer oberhalb des Feldes während einer definierten Zeitspanne zunächst gehaltenen, temperaturbedingt mechanisch noch instabilen Hohlglasartikels benutzt. Sobald der Hohlglasartikel auf dem Feld abgesetzt worden ist, wird der Überstromkanal geschlossen, so dass die Kühlung in der Folgezeit nur noch mittels des aus dem Ventil des Feldes austretenden Kühlluftstromes erfolgt.

Die den Ventilen zugeordneten Antriebe sind entsprechend den Merkmalen der Ansprüche 2 und 3_zumindest teilweise in das Gehäuse unterhalb der Absetzplatte einbezogen. Sie sind somit gegenüber der durch Wärme und abrasiv wirkende Stäube gekennzeichneten Atmosphäre einer Glashütte geschützt angeordnet.

Dem Überströmkanal ist entsprechend den Merkmalen der Ansprüche 4 und 5 ein durch einen Ringkolben gebildeter druckmittelbetätigbarer Schaltmechanismus zugeordnet. Die Benutzung anderer Schaltmechanismen an dieser Stelle wird jedoch nicht ausgeschlossen. Dieser Ringkolben ist zum zentralen Durchströmen mit Kühlluft bestimmt und angeordnet.

Die Merkmale des Anspruchs 6 sind auf eine beispielhafte konstruktive Ausführungsform des Ventils eines Feldes gerichtet, dessen Schaltglied durch eine Drosselscheibe gebildet ist. An dieser Stelle können jedoch andere, zwischen einer Öffnungsstellung und einer Schließstellung stetig steuerbare Ventile eingesetzt werden.

Gemäß den Merkmalen der Ansprüche 7 bis 10 sind die Staudruckkammern sowie die Zuluftkammer mit Sensoren zur Messung von Druck und Temperatur ausgerüstet, wobei die auf diese Weise erfassten Messgrößen als Grundlage für eine artikel- bzw. feldspezifische Regelung der in einem Feld der Absetzplatte zur Verfügung gestellten Kühlleistung herangezogen werden können.

Als weitere Messgrößen herangezogen werden können ferner die Temperatur des im Take Out Greifers gehaltenen Hohlglasartikels sowie die Umgebungstemperatur.

Gemäß den Merkmalen des Anspruchs 11 ist eine Steuerungseinrichtung vorgesehen, in der in einem Datenspeicher die Parameter des Kühlvorgangs auf der Absetzplatte jeweils artikelspezifisch gespeichert sind und zur Definition von Sollwerten einer Regelung nutzbar sind. Zu regeln sind in diesem Zusammenhang neben den Kühlluftströmen auch die Zeitspannen, in denen der Hohlglasartikel im Take Out Greifer dem maximalen Kühlluftstrom ausgesetzt ist sowie die dem zugrunde liegende Zeitspanne. Angestrebt wird hierbei ein Zustand des Artikels, der durch eine hinreichende mechanische Stabilität gekennzeichnet ist, um diesen ohne das Risiko von Beschädigungen auf die Absetzplatte stellen zu können. Die Steuerungseinrichtung steht zu diesem Zweck zumindest mit den Drucksensoren der Staudruckkammern sowie der Zuluftkammer in Verbindung.

Die Steuerungseinrichtung steht entsprechend den Merkmalen des Anspruchs 12 zusätzlich mit den Temperatursensoren der Staudruckkammern und / oder der Zuluftkammer in Verbindung. Auf diese Weise ist eine verbesserte, schwankende Temperaturen der Kühlluft kompensierende Regelung darstellbar.

Gemäß den Merkmalen des Anspruchs 13 ist ein erster die individuelle Druckregelung der Staudruckkammern betreffender Regelkreis vorgesehen, dessen Sollwerte feldspezifisch durch in dem Datenspeicher artikelspezifisch abgelegte Datensätze gebildet werden. Einer jeden der Staudruckkammern ist ein solcher erster Regelkreis zugeordnet.

Gemäß den Merkmalen der Ansprüche 14 bis 16 kann ein solcher erster Regelkreis auch für die Zuluftkammer vorgesehen sein. Eine solche Druckregelung kann ferner durch eine in einem zweiten, dem ersten unterlagerten, die Temperatur der jeweiligen Staudruckkammer und / oder der Zuluftkammer berücksichtigenden Regelkreis weiter mit Hinblick auf die Darstellung einer konstanten Kühlleistung verbessert werden. Die Ausgangsgröße des ersten Regelkreis bildet hierbei eine Führungsgröße für den zweiten Regelkreis. Auf diese Weise, nämlich durch Hinzunahme weiterer Einflußgrößen wie z. B. die Temperatur des im Take Out Greifers gehaltenen Hohlglasartikels, der Umgebungstemperatur usw. können der abschließenden auf die Stellorgane der Kühlluftströme einwirkenden Stellgröße weitere unterlagerte und Störeinflüsse eliminierende Regelkreise zugeschaltet werden.

Zu den zu steuernden Größen der Kühlluftströme gehören auch die Zeitspannen, während welcher die Hohlglasartikel im Take Out Greifer gehalten werden bzw. auf dem Feld der Absetzplatte aufstehend, dem Kühlluftstrom in dem jeweiligen Feld ausgesetzt sind, so dass das übergeordnete Ziel der Regelung in der Darstellung einer reproduzierbaren und an den Hohlglasartikel, insbesondere dessen Form und Temperatur angepassten bedarfsgerechten Wärmeabfuhr zu sehen ist.

Die Erfindung wird im Folgenden unter Bezugnahme auf das in den Zeichnungen dargestellte Ausführungsbeispiel näher erläutert werden. Es zeigen.
Fig. 1 eine erfindungsgemäße Absetzplattenanordnung in einem Vertikalschnitt;

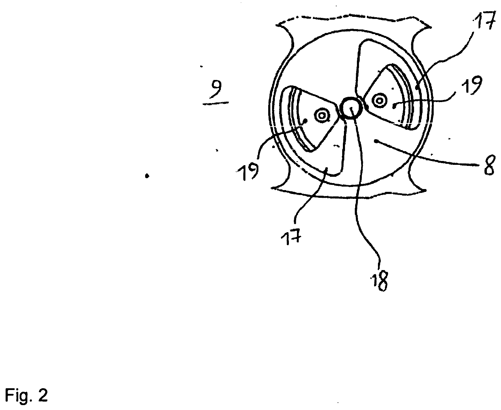

Fig. 2 eine Einzelheit II der Fig. 1 in vergrößerter Darstellung;
Fig. 3 ein Blockschaltbild einer datenbankgestützten Kühlluftregelung für eine Absetzplattenanordnung gemäß Fig. 1.

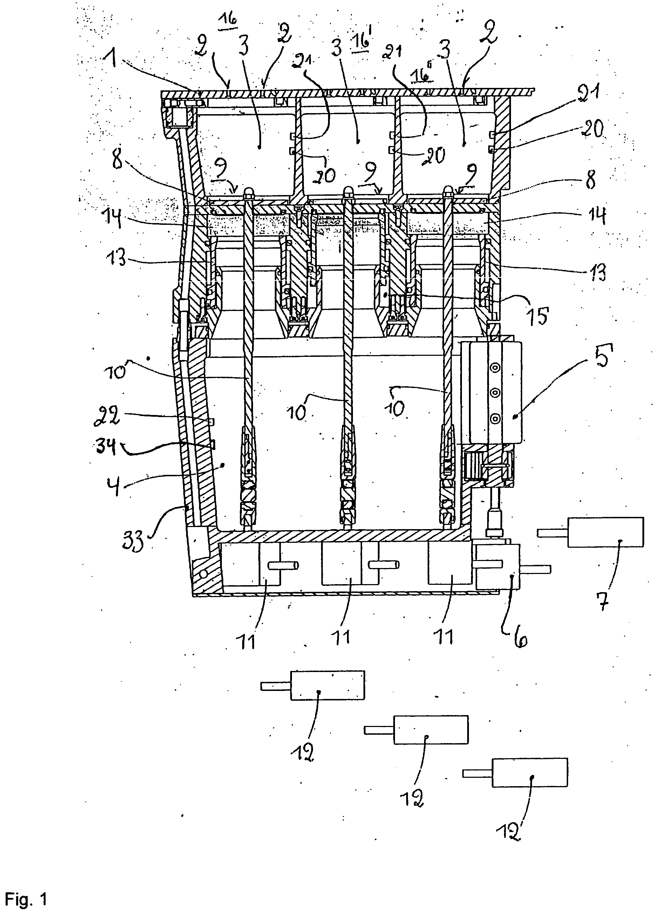

Mit 1 ist in Fig. 1 eine Absetzplatte bezeichnet, die in an sich bekannter Weise mit Öffnungen 2 zur Führung von Kühlluft versehen und zum Aufstellen von Hohlglasartikeln bestimmt ist.

Die für ein Absetzen von Hohlglasartikeln nutzbare Fläche der Absetzplatte 1 ist in Felder 16, 16', 16" unterteilt, die einzeln einem abzusetzenden Hohlglasartikel entsprechen und denen jeweils eine unterhaib der Absetzplatte 1 eingerichtete Staudruckkammer 3 entspricht, wobei die Größe und sonstige Beschaffenheit aller Staudruckkammern 3 gleich ausgelegt sein kann.

Mit 4 ist eine Zuluftkammer bezeichnet, die zur Versorgung aller Staudruckkammern 3 bestimmt ist und der Kühlluft über ein Ventil 5 zugeführt wird. Die Stellung dieses Ventils 5 ist über ein Getriebe 6 mittels eines Motors 7 steuerbar. An das Ventil 5 schließt sich eine zeichnerisch aus Gründen der Übersichtlichkeit nicht dargestellte Kühlluftversorgung an.

Die Zuluftkammer 4 steht mit den einzelnen Staudruckkammern 3 jeweils über ein mit einer Drosselscheibe 8 ausgerüstetes Drosselventil 9 in Verbindung, wobei jedes Drosselventil 9 individuell über eine Welle 10 steuerbar ist, die über ein Getriebe 11 jeweils mit einem Motor 12 in Verbindung steht.

Einem jeden der Drosselventile 9 ist ausgehend von der Zuluftkammer 4 ein Ringkolben 13 zugeordnet, der zwischen einer ersten, in der Zeichnung untersten Stellung, in der ein Überströmkanal 14 freigegeben ist und einer zweiten, in der Zeichnung obersten Stellung, in der der Überströmkanal 14 geschlossen ist, bewegbar ist, nämlich parallel zu den Wellen 10. In der genannten ersten Stellung ist ein maximaler Kühlluftstrom gegeben, der durch den hohl ausgebildeten Ringkolben 13 hindurch nach Maßgabe der Stellung des Drosselventils 9 durch dieses hindurch und zusätzlich durch den Überströmkanal 14 austritt. In der genannten zweiten Stellung ist der Überströmkanal 14 geschlossen, so dass Kühlluft ausschließlich nach Maßgabe der Stellung des Drosselventils 9 aus der jeweiligen Staudruckkammer 3 austreten kann.

Jeder der Ringkolben 13 ist individuell druckmittelbetätigt steuerbar, so dass die Beaufschlagung einer jeden der in Fig. 1 dargestellten drei Staudruckkammern 3 individuell möglich ist. Anstelle einer druckmittelbetätigten Ansteuerung kommt auch eine elektrische bzw. motorische Ausführungsform der Ansteuerung in Betracht. Auf eine Wiedergabe der zur Beaufschlagung von den einzelnen Ringkolben 13 zugeordneten Ringkammern 15 und gleichermaßen auf eine Darstellung einer elektrischen Ansteuerung ist ebenfalls aus Gründen der zeichnerischen Übersichtlichkeit verzichtet worden.

Man erkennt, dass die aus jeweils einem, zum Aufsetzen eines Hohlglasartikels auf der Absetzplatte 1 bestimmten Feld 16, 16', 16" individuell austretenden Kühlluftströme beispielsweise in Abhängigkeit von der Art des jeweils aufstehenden Hohlglasartikels steuerbar sind, nämlich durch entsprechendes Ansteuern der einzelnen Drosselventile 9.

Die Drosselventile 9 sind zwischen einer Öffnungs- und einer Schließstellung vorzugsweise stetig steuerbar, und zwar durch Ansteuerung der Motoren 12. Zu diesem Zweck ist die genannte Drosselscheibe 8 in der gezeigten Darstellung mit zwei untereinander gleich beschaffenen kreissektorförmigen Ausnehmungen 17 versehen und steht mit der jeweiligen Welle 10 in drehfester Verbindung, so dass durch Drehung um die Achse 18 der jeweiligen Welle 10 die Ausnehmungen 17 in eine, Öffnungen 19 in der Wandung der Staudruckkammer 3 überlagernde Stellung bringbar sind, hierbei einen ausgehend von der Staudruckkammer 3 durchgängigen Strömungspfad darstellend.

Mit 20 ist ein Drucksensor bezeichnet, wobei in jeder der Staudruckkammern 3 ein solcher Drucksensor 20 fest angeordnet ist. Mit 21 ist ein Temperatursensor bezeichnet, wobei in jeder der Staudruckkammern 3 ein solcher Temperatursensor 21 fest angeordnet ist. Mit 22 ist ein innerhalb der Zuluftkammer 4 fest angeordneter Drucksensor bezeichnet. Schließlich kann auch die Zuluftkammer 4 mit einem fest angeordneten Temperatursensor 34 ausgerüstet sein.

Zeichnerisch nicht dargestellt ist eine, eine CPU (Central Processor Unit) umfassende Steuerungseinrichtung, die mit den Drucksensoren 20, 22, den Temperatursensoren 21, 34 sowie den Motoren 7, 12 einen Regelkreis bildet, der durch Führungsgrößen gekennzeichnet ist, die zumindest artikelspezifisch in der CPU gespeichert sind und eine bedarfsgerechte Kühlufteinstellung sichern.

Die Staudruckkammern 3, die Zuluftkammer 4 und die Motoren 7, 12 können vorteilhaft in einem oberseitig durch die Absetzplatte 1 geschlossenen Gehäuse 33 angeordnet sein.

Die Wirkungsweise der vorstehend beschriebenen Absetzplattenanordnung wird im Folgenden kurz dargestellt werden:
Die Zuluftkammer 4 wird dauerhaft mit Kühlluft beaufschlagt, wobei ein Maximalwert des Kühlluftstromes durch die Stellung des Ventils 5 definiert ist. Der mittels eines Take Out Greifers der Maschinenstation einer I.S. Glasformmaschine entnommene, mechanisch noch instabile Hohlglasartikel wird mittels des Greifers zunächst oberhalb der Absetzplatte 1 während einer wählbaren Zeitspanne gehalten, um dessen mechanische Eigenschaften zu verbessern. Während dieser Zeitspanne wird der Ringkolben 13 des jeweiligen Feldes 16, 16', 16" in die unterste Stellung verfahren, hierbei den Überströmkanal 14 öffnend und eine maximale Kühlwirkung auf den Hohlglasartikel ausübend. Nach Ablauf der genannten Zeitintervalls wird der Hohlglasartikel mittels des Greifers auf die Absetzplatte 1 gesetzt, wobei gleichzeitig der Ringkolben 13 in seine oberste Stellung verfahren wird, hierbei den Überströmkanal 14 schließend.

In dieser Betriebsphase wird der aufstehende Hohlglasartikel mit einem Kühlluftstrom beaufschlagt, der quantitativ durch die Stellung des jeweiligen Ventils 9 bestimmt ist.

Um während der Verweildauer des Hohlglasartikels in dem Greifer oberhalb der Absetzplatte 1 eine konstante maximale Wärmeabfuhr zu sichern, wird der über die Zuluftkammer 4 zur Verfügung stehende maximale Kühlluftstrom mittels des Drucksensors 22 durch entsprechende Einstellung des Ventils 5 geregelt und im Bedarfsfall mittels der Temperatursensoren 21 feldspezifisch kompensiert.

Anschließend werden die Hohlglasartikel auf die einzelnen Felder 16, 16', 16" der Absetzplatte 1 gesetzt, wobei die jeweiligen Ringkolben 13 in ihre oberste Stellung verfahren werden, so dass von nun an Kühlluft nur noch über die Ventile 9 ausströmt und zwar in Abhängigkeit von dem sich innerhalb der einzelnen Staudruckkammern 3 einstellenden Staudruck, der als Messgröße für die Bemessung des Kühlluftstromes für einen in dem jeweiligen Feld 16, 16', 16" aufstehenden Hohlglasartikels benutzt wird. In Abhängigkeit von der Art des jeweils aufstehenden Hohlglasartikels werden unter Zugrundelegung eines in einer CPU (Central Processor Unit) gespeicherten, artikelspezifischen Sollwerts der feldspezifische Kühlluftstrom ermittelt und mittels jeweiligen Motoren 12 über die jeweilige Welle 10 eingestellt. Der in Abhängigkeit von dem darzustellenden Kühlluftstrom erforderliche Steliwert für die Motoren 12 ist ebenfalls in der CPU gespeichert. Mittels der über die Temperatursensoren 21 in den Staudruckkammern 3 erfassten Temperaturmesswerte kann der Druckmesswert gegebenenfalls korrigiert werden, und zwar mit dem Ziel, eine konstante Wärmeabfuhr zu erreichen. Weitere Korrekturmöglichkeiten bestehen aufgrund der Messergebnisse des Temperatursensors 34 der Zuluftkammer 4.

Nachdem die Verstellung des Kühlluftstromes in einem Feld 16, 16',16" stets die Kühlluftströme der anderen Felder beeinflusst, findet eine Verstellung der Kühlluftströme sequentiell statt. Es wird somit zunächst nur ein erster Kühlluftstrom verstellt, anschließend ein zweiter usw.

Das wie vorstehend beschrieben aufgebaute Regelungssystem kann aufbauend auf weiteren Temperatursensoren oder auch mittels Verfahren der rechnergestützten Bildauswertung zu einem vollautomatischen Betrieb entwickelt werden, indem aus Messgrößen beispielsweise der Temperatur des im Take Out Greifer erfassten Hohlglasartikels optimale Sollwerte für die Einstellung des Kühlluftstromes ermittelt und dem weiteren Verfahren zugrunde gelegt werden.

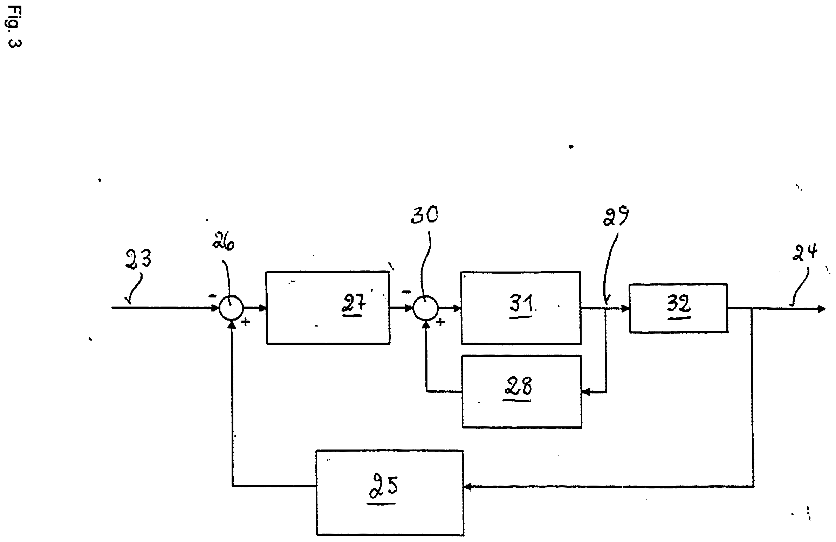

Fig. 3 zeigt anhand eines Schaltschemas beispielhaft den grundsätzlichen Aufbau eines feldindividuellen Regelungssystems für die Einstellung eines Kühlluftstromes.

Ausgangspunkt sind an der Stelle 23 die in einer Datenbank abgelegten Werte für den Druck in den einzelnen Staudruckkammern 3 einschließlich des Druckwertes in der Zuluftkammer 4, der den maximal darstellbaren Kühlluftstrom beschreibt. An dieser Stelle 23 werden somit die artikelspezifischen Sollwerte definiert, wobei vorausgesetzt wird, dass jeweils Informationen betreffend den in einem bestimmten Feld 16, 16', 16" gerade abzusetzenden Hohlglasartikel vorliegen.

An der Stelle 24 steht die jeweilige Regelgröße, nämlich deren Istwert an, wobei diese Istwerte, bei denen es sich bezogen auf das dargestellte Ausführungsbeispiel um die Drücke p₁, p₂, p₃ der drei Staudruckkammern 3 sowie den Druck p_{z} in der Zuluftkammer 4 handelt. Diese vier Istwerte werden in einem Schaltkreis 25 umgesetzt und in einem ersten Summierungspunkt 26 zur Gewinnung jeweils eines eine erste Regelabweichung beschreibenden Wertes umgesetzt, der in einem ersten Regelkreis 27 zur Gewinnung einer ersten Stellgröße umgesetzt wird.

Mit 28 ist ein Schaltkreis bezeichnet, der zur Umsetzung von Istwerten betreffend die Temperaturen T₁, T₂, T₃ der Staudruckkammern sowie T_{z} der Zuluftkammer 4 eingerichtet ist, die an der Stelle 29 gewonnen werden und in einem zweiten Summierungspunkt 30 zusammen mit der durch den ersten Regelkreis 27 ausgangsseitig generierten Führungsgröße für den zweiten Regelkreis 31 zur Bildung einer zweiten Regelabweichung benutzt werden. Diese die zweite Regelabweichung beschreibende Größe wird in dem zweiten Regelkreis 31 zur Darstellung eines Eingangssignals für Stellglieder 32 benutzt, über welche jeweils auf die Funktionselemente eingewirkt wird, die zur Beeinflussung der genannten Temperatur- und Druckwerte bestimmt sind.

Es handelt sich somit um eine Druckregelung, der eine Temperaturregelung unterlagert ist, welche auf eine Kompensation eines Temperatureinflusses abzielt. Die Regelung ist datenbankgestützt mit Hinblick auf eine artikelspezifische Einrichtung von Kühlluftströmen angelegt, um reproduzierbare, an den Artikel angepasste Kühlleistungen bzw. Wärmeabfuhren bereit zu stellen.

Das gezeigte Regelungssystem kann im Bedarfsfall weiter entwickelt werden, indem weitere Korrekturgrößen in den Regelalgorithmus mit einbezogen werden wie z. B. die Artikeltemperatur im Take Out Greifer, die dortige Verweildauer, die Umgebungstemperatur usw.

**Bezugszeichenliste:**

| | | | | | |
|---|---|---|---|---|---|
| 1. | Absetzplatte | 15. | Ringkammer | 26. | Summierungspunkt |
| 2. | Öffnung | 16. | Feld | 27. | Regelkreis |
| 3. | Staudruckkammer | 16'. | Feld | 28. | Schaltkreis |
| 4. | Zuluftkammer | 16". | Feld | 29. | Stelle |
| 5. | Ventil | 17. | Ausnehmung | 30. | Summierungspunkt |
| 6. | Getriebe | 18. | Achse | 31. | Regelkreis |
| 7. | Motor | 19. | Öffnung | 32. | Stellglieder |
| 8. | Drosselscheibe | 20. | Drucksensor | 33. | Gehäuse |
| 9. | Ventil | 21. | Temperatursensor | 34. | Temperatursensor |
| 10. | Welle | 22. | Drucksensor | | |
| 11. | Getriebe | 23. | Stelle | | |
| 12. | Motor | 24. | Stelle | | |
| 13. | Ringkolben | 25. | Schaltkreis | | |
| 14. | Überströmkanal | | | | |

## Patentansprüche

1. Absetzplattenanordnung für eine Glasformmaschine mit einer mehrere, jeweils zum Aufsetzen zu kühlender Hohlglasartikel bestimmter Felder (16, 16', 16") aufweisenden, mit Öffnungen (2) zum Durchtritt von Kühlluft versehenen Absetzplatte (1) und mit einer Kühlluftversorgung, wobei jedem Feld (16, 16', 16") eine hinsichtlich ihres Druckes individuell regelbare Staudruckkammer (3) zugeordnet ist, und wobei die Kühlluftversorgung mit einem zwischen einer Schließstellung und einer Öffnungsstellung stetig regelbaren Drosselventil (9) versehen ist, **dadurch gekennzeichnet, dass** in einem sich an die Unterseite der Absetzplatte (1) anschließenden Gehäuse (33) die Staudruckkammern (3) und eine mit der Kühlluftversorgung in Verbindung stehende Zuluftkammer (4) angeordnet sing, dass jede Staudruckkammer (3) mit der Zuluftkammer (4) über das zwischen einer Öffnungsstellung und einer Schließstellung stetig regelbare Drosselventil (9) in Verbindung steht, und dass ein einen Kühliuftaustritt über das jeweilige Feld (16, 16', 16") der Absetzplatte (1) unter Umgehung des jeweiligen Ventils (9) ermöglichender Überströmkanal (14) und ein zum Öffnen und Schließen des Überströmkanals (14) bestimmter, motorisch betätigbarer Schaltmechanismus vorgesehen sind.

2. Absetzplattenanordnung nach Anspruch 1, **dadurch gekennzeichnet, dass** jedem der Ventile (5, 9) ein motorischer Antrieb zugeordnet ist.

3. Absetzplattenanordnung nach Anspruch 2, **dadurch gekennzeichnet, dass** die den Ventilen (5, 9) zugeordneten Antriebe zumindest teilweise in das Gehäuse einbezogen sind.

4. Absetzplattenanordnung nach einem der Ansprüche 1 bis 3, **dadurch gekennzeichnet, dass** der Schaltmechanismus durch einen Ringkolben (13) gebildet wird, der zwischen einer den Überströmkanal (14) öffnenden und einer dieser schließenden Stellung verschiebbar angeordnet ist.

5. Absetzplattenanordnung nach Anspruch 4, **dadurch gekennzeichnet, dass** der Ringkolben (13) nach Maßgabe der Öffnungsstellung des Ventils (9) zum zentralen Durchströmen mit Kühlluft bestimmt und angeordnet ist.

6. Absetzplattenanordnung nach einem der Ansprüche 2 bis 5, **dadurch gekennzeichnet, dass** jedes Ventil (9) eine um eine Achse (18) drehbare, mit Ausnehmungen (17) versehene Drosselscheibe (8) aufweist, dass in der Wandung der Staudruckkammer (3) Öffnungen (19) mit der Maßgabe angeordnet sind, das durch Drehung der Drosselscheibe (8) um die Achse (18) ein Öffnungszustand des Ventils (9) in Abhängigkeit von einer Überdeckung der Öffnungen (19) und der Ausnehmungen (17) darstellbar ist.

7. Absetzplattenanordnung nach einem der Ansprüche 1 bis 6, **dadurch gekennzeichnet, dass** jede Staudruckkammer (3) mit einem Drucksensor (20) ausgerüstet ist.

8. Absetzplattenanordnung nach einem der Ansprüche 1 bis 7, **dadurch gekennzeichnet, dass** jede Staudruckkammer (3) mit einem Temperatursensor (21) ausgerüstet ist.

9. Absetzplattenanordnung nach einem der Ansprüche 1 bis 8, **dadurch gekennzeichnet, dass** die Zuluftkammer (4) mit einem Drucksensor (22) ausgerüstet ist.

10. Absetzplattenanordnung nach einem der Ansprüche 1 bis 9, **dadurch gekennzeichnet, dass** die Zuluftkammer (4) mit einem Temperatursensor ausgerüstet ist.

11. Absetzplattenanordnung nach einem der Ansprüche 7 bis 10, **gekennzeichnet durch** eine, einen Datenspeicher aufweisende, zumindest mit den Drucksensoren (20, 22) in Verbindung stehende Steuerungseinrichtung, wobei der Datenspeicher zur Speicherung hohlglasartikelspezifischer, die Kühlung betreffender Parameter sowie zur Generierung von Sollwerten betreffend jeweils feldspezifische Kühlluftströme eingerichtet ist.

12. Absetzplattenanordnung nach Anspruch 11, **dadurch gekennzeichnet, dass** die Steuerungseinrichtung zusätzlich wenigstens mit den Temperatursensoren (21) der Staudruckkammern (3) in Verbindung steht.

13. Absetzplattenanordnung nach Anspruch 11 oder 12, **dadurch gekennzeichnet, dass** für eine feld- und hohlglasartikelspezifische Kühlung ein erster Regelkreis (27) eingerichtet ist, dessen Sollwert ein dem Datenspeicher der Steuerungseinrichtung entnommener Druckwert für die jeweilige Staudrucckammer (3) ist, der mit dem jeweiligen Istwert des Druckes der Staudrucckammer (3) verglichen und zur Nachführung der Öffnung des Ventils (9) als Stellgröße umsetzbar ist.

14. Absetzplattenanordnung nach Anspruch 13, **dadurch gekennzeichnet, dass** dem ersten Regelkreis (27) ein zweiter, dessen Stellgröße nach Maßgabe des Istwertes der Temperatur der Kühlluft in der Staudruckkammer (3) modifizierender Regelkreis (31) unterlagert ist.

15. Absetzplattenanordnung nach Anspruch 13 oder 14, **dadurch gekennzeichnet, dass** in den ersten Regelkreis (27) auch die Druckregelung in der Zuluftkammer (4) einbezogen ist.

16. Absetzplattenanordnung nach einem der Ansprüche 13 bis 15, **dadurch gekennzeichnet, dass** dem ersten Regelkreis (27) ein zweiter, dessen Stellgröße nach Maßgabe des Istwertes der Temperatur der Zuluftkammer (4) modifizierender Regelkreis (31) unterlagert ist.

## Claims

1. Dead plate assembly for a glassware forming machine having a dead plate (1), which comprises a plurality of areas (16, 16', 16") each intended for the placement of hollow glass articles to be cooled and is provided with orifices (2) for the passage of cooling air, and having a cooling air supply, wherein each area (16, 16', 16") is allocated a dynamic pressure chamber (3) which is individually controllable with respect to its pressure, and wherein the cooling air supply is provided with a throttle valve (9) continuously controllable between a closed position and an open position, **characterised in that** the dynamic pressure chambers (3) and an inlet air chamber (4) connected to the cooling air supply are disposed in a housing (33) adjoining the underside of the dead plate (1), that each dynamic pressure chamber (3) is connected to the inlet air chamber (4) via the throttle valve (9) which is continuously controllable between an open position and a closed position, and that an overflow channel (14), which enables an outlet of cooling air via the respective area (16, 16', 16") of the dead plate (1) while bypassing the respective valve (9), and a switching mechanism, which is intended for opening and closing the overflow channel (14) and can be actuated in a motorised manner, are provided.

2. Dead plate assembly as claimed in claim 1, **characterised in that** each of the valves (5, 9) is allocated a motorised drive.

3. Dead plate assembly as claimed in claim 2, **characterised in that** the drives allocated to the valves (5, 9) are at least partially incorporated into the housing.

4. Dead plate assembly as claimed in any one of claims 1 to 3, **characterised in that** the switching mechanism is formed by an annular piston (13) which is disposed so as to be displaceable between a position opening the overflow channel (14) and a position closing same.

5. Dead plate assembly as claimed in claim 4, **characterised in that** the annular piston (13) is intended and arranged for cooling air to flow centrally through it according to the opening position of the valve (9).

6. Dead plate assembly as claimed in any one of claims 2 to 5, **characterised in that** each valve (9) comprises a throttle plate (8) which can rotate about an axis (18) and is provided with apertures (17), that openings (19) are disposed in the wall of the dynamic pressure chamber (3) with the proviso that, by rotation of the throttle plate (8) about the axis (18), an opening state of the valve (9) can be presented in dependence upon overlapping of the openings (19) and the apertures (17).

7. Dead plate assembly as claimed in any one of claims 1 to 6, **characterised in that** each dynamic pressure chamber (3) is fitted with a pressure sensor (20).

8. Dead plate assembly as claimed in any one of claims 1 to 7, **characterised in that** each dynamic pressure chamber (3) is fitted with a temperature sensor (21).

9. Dead plate assembly as claimed in any one of claims 1 to 8, **characterised in that** the inlet air chamber (4) is fitted with a pressure sensor (22).

10. Dead plate assembly as claimed in any one of claims 1 to 9, **characterised in that** the inlet air chamber (4) is fitted with a temperature sensor.

11. Dead plate assembly as claimed in any one of claims 7 to 10, **characterised by** a control device, which comprises a data store and is connected at least to the pressure sensors (20, 22), wherein the data store is designed to store parameters, which are specific to hollow glass articles and relate to cooling, and to generate desired values relating respectively to field-specific cooling air streams.

12. Dead plate assembly as claimed in claim 11, **characterised in that** the control device is additionally connected at least to the temperature sensors (21) of the dynamic pressure chambers (3).

13. Dead plate assembly as claimed in claim 11 or 12, **characterised in that**, for area-specific or hollow glass article-specific cooling, a first control circuit (27) is provided, the desired value of which is a pressure value, taken from the data store of the control device, for the respective dynamic pressure chamber (3), which pressure value is compared with the respective actual value of the pressure of the dynamic pressure chamber (3) and can be implemented as a variable to track the opening of the valve (9).

14. Dead plate assembly as claimed in claim 13, **characterised in that** a second control circuit (31) is subordinate to the first control circuit (27), said second control circuit modifying the variable of said first control circuit according to the actual value of the temperature of the cooling air in the dynamic pressure chamber (3).

15. Dead plate assembly as claimed in claim 13 or 14, **characterised in that** the pressure control in the inlet air chamber (4) is also incorporated into the first control circuit (27).

16. Dead plate assembly as claimed in any one of claims 13 to 15, **characterised in that** a second control circuit (31) is subordinate to the first control circuit (27), said second control circuit modifying the variable of said first control circuit according to the actual value of the temperature of the inlet air chamber (4).

## Revendications

1. Agencement de plaques de dépose pour une machine à façonner le verre comportant une plaque de dépose (1) présentant respectivement plusieurs champs déterminés (16, 16', 16") pour poser des articles en verre creux à refroidir, comportant des ouvertures (2) pour le passage d'air froid et comportant une alimentation en air froid, dans lequel à chaque champ (16, 16', 16") est affectée une chambre de pression dynamique (3) réglable individuellement en ce qui concerne sa pression, et dans lequel l'alimentation en air froid est dotée d'une soupape d'étranglement (9) réglable en continu entre une position de fermeture et une position d'ouverture, **caractérisé en ce que** les chambres de pression dynamique (3) et une chambre d'amenée d'air (4) raccordée à l'alimentation en air froid sont agencées dans un boîtier (33) adjacent au côté inférieur de la plaque de dépose (1), **en ce que** chaque chambre de pression dynamique (3) est raccordée à la chambre d'amenée d'air (4) par le biais de la soupape d'étranglement (9) réglable en continu entre une position d'ouverture et une position de fermeture, et **en ce qu'**un canal de débordement (14) permettant une sortie d'air froid par le biais du champ respectif (16, 16', 16") de la plaque de dépose (1) en contournant la soupape respective (9) et un mécanisme de commutation pouvant être actionné par une action motrice, déterminé pour l'ouverture et la fermeture du canal de débordement (14) sont prévus.

2. Agencement de plaques de dépose selon la revendication 1, **caractérisé en ce qu'**un entraînement moteur est affecté à chaque soupape (5, 9).

3. Agencement de plaques de dépose selon la revendication 2, **caractérisé en ce que** les entraînements affectés aux soupapes (5, 9) sont inclus au moins partiellement dans le boîtier.

4. Agencement de plaques de dépose selon l'une quelconque des revendications 1 à 3, **caractérisé en ce que** le mécanisme de commutation est formé par un piston annulaire (13) qui est agencé entre une position ouvrant le canal de débordement (14) et une position fermant celui-ci.

5. Agencement de plaques de dépose selon la revendication 4, **caractérisé en ce que** le piston annulaire (13) est déterminé et agencé conformément à la position d'ouverture de la soupape (9) pour l'écoulement central d'air froid.

6. Agencement de plaques de dépose selon l'une quelconque des revendications 2 à 5, **caractérisé en ce que** chaque soupape (9) présente un disque d'étranglement (8) doté d'évidements (17) pouvant tourner autour d'un axe (18), **en ce que** dans la paroi de la chambre de pression dynamique (3), des ouvertures (19) sont agencées à condition que par une rotation du disque d'étranglement (8) autour de l'axe (18), un état d'ouverture de la soupape (9) puisse être réalisé en fonction d'un recouvrement des ouvertures (19) et des évidements (17).

7. Agencement de plaques de dépose selon l'une quelconque des revendications 1 à 6, **caractérisé en ce que** chaque chambre de pression dynamique (3) est équipée d'un capteur de pression (20).

8. Agencement de plaques de dépose selon l'une quelconque des revendications 1 à 7, **caractérisé en ce que** chaque chambre de pression dynamique (3) est équipée d'un capteur de température (21).

9. Agencement de plaques de dépose selon l'une quelconque des revendications 1 à 8, **caractérisé en ce que** la chambre d'amenée d'air (4) est équipée d'un capteur de pression (22).

10. Agencement de plaques de dépose selon l'une quelconque des revendications 1 à 9, **caractérisé en ce que** la chambre d'amenée d'air (4) est équipée d'un capteur de température.

11. Agencement de plaques de dépose selon l'une quelconque des revendications 7 à 10, **caractérisé par** un système de commande présentant une mémoire de données, raccordé au moins aux capteurs de pression (20, 22), dans lequel la mémoire de données est conçue pour l'enregistrement de paramètres spécifiques des articles en verre creux concernant le refroidissement ainsi que pour la génération de valeurs de consigne concernant respectivement des courants d'air froid spécifiques d'un champ.

12. Agencement de plaques de dépose selon la revendication 11, **caractérisé en ce que** le système de commande est en outre raccordé au moins aux capteurs de température (21) des chambres de pression dynamique (3).

13. Agencement de plaques de dépose selon la revendication 11 ou 12, **caractérisé en ce que** pour un refroidissement spécifique d'un champ et d'un article en verre creux, un premier cycle de réglage (27) est conçu, dont une valeur de consigne est une valeur de pression tirée de la mémoire de données du système de commande pour la chambre de pression dynamique respective (3), qui est comparée à la valeur réelle respective de la pression de la chambre de pression dynamique (3) et peut être convertie en grandeur de réglage pour la poursuite de l'ouverture de la soupape (9)

14. Agencement de plaques de dépose selon la revendication 13, **caractérisé en ce qu'**au premier circuit de réglage (27) est subordonné un deuxième circuit de réglage (31) modifiant sa grandeur de réglage conformément à la valeur réelle de la température de l'air froid dans la chambre de pression dynamique (3).

15. Agencement de plaques de dépose selon la revendication 13 ou 14, **caractérisé en ce que** dans le premier circuit de réglage (27), le réglage de la pression est également inclus dans la chambre d'amenée d'air (4).

16. Agencement de plaques de dépose selon l'une quelconque des revendications 13 à 15, **caractérisé en ce qu'**au premier circuit de réglage (27) est subordonné un deuxième circuit de réglage (31) modifiant sa grandeur de réglage conformément à la valeur réelle de la température de la chambre d'amenée d'air (4).
